(19) Europäisches Patentamt

European Patent Office

Office européen des brevets

(11) **EP 0 616 447 B1**

## (12) EUROPÄISCHE PATENTSCHRIFT

(45) Veröffentlichungstag und Bekanntmachung des Hinweises auf die Patenterteilung:
**16.01.2002   Patentblatt 2002/03**

(51) Int Cl.⁷: **H04L 9/30**

(21) Anmeldenummer: **93115217.7**

(22) Anmeldetag: **22.09.1993**

(54) **Verfahren zur gesicherten Datenübertragung über ungesicherte Verbindungen**

Method for secure data transmission over unsecure links

Procédé de transmission sécurisée de données par une liaison non sécurisée

(84) Benannte Vertragsstaaten:
**BE DK FR GB IT LU NL SE**

(30) Priorität: **19.03.1993   DE 4308825**

(43) Veröffentlichungstag der Anmeldung:
**21.09.1994   Patentblatt 1994/38**

(73) Patentinhaber: **DEUTSCHE BUNDESPOST TELEKOM**
**53175 Bonn (DE)**

(72) Erfinder: **Huber, Klaus, Dr.-Ing.**
**D-64347 Griesheim (DE)**

(56) Entgegenhaltungen:
- **IEEE TRANSACTIONS ON INFORMATION THEORY, Bd.IT-24, Nr.5, September 1978, NEW YORK US Seiten 525 - 530 MERKLE ET AL. 'HIDING INFORMATION AND SIGNATURES IN TRAPDOOR KNAPSACKS'**

**Beschreibung**

Die Erfindung bezieht sich auf ein Verfahren gemäß dem Oberbegriff des Anspruch 1.

Öffentliche Verschlüsselungsverfahren dieser Art wurden durch die Arbeiten von Diffie, Hellman und Merkle eingeführt (W.Diffie, M.E.Hellman, "New directions in cryptography", *IEEE* Transactions *on Information Theory*, Vol. IT-22, November 1976, Seiten 644 bis 654; R.C.Merkle, "Secure communication over insecure channels", *CACM*, April 1978, Seiten 294 bis 299). Sie benutzen zwei Schlüssel, einen zum Ver- und einen zum Entschlüsseln. Mit dem öffentlichen Schlüssel kann jeder eine Nachricht verschlüsseln, entschlüsseln kann jedoch nur derjenige leicht, der den geheimen Schlüssel kennt. Das Rucksackproblem ist im allgemeinen ein sehr schwieriges mathematisches Problem. Es eignet sich zur Konstruktion von öffentlichen Verschlüsselungsverfahren, wenn es gelingt auf geeignete Weise eine Hintertür (engl. trapdoor, geheimer Schlüssel) einzubauen, die es dem legitimen Benutzer erlaubt das Rucksackproblem zu lösen. Das Rucksackproblem ist wie folgt. Öffentlich bekannt sind $L$ ganzzahlige Rucksackgewichte $c_j$, $j = 0$, 1, ..., $L$ - 1. Die Nachricht, bestehend aus $L$ Werten $m_j$ aus einer Untermenge $M$ der ganzen Zahlen, wird verschlüsselt, indem die Summe $\sum_j m_j \cdot c_j$ gebildet wird. Das Rucksackproblem lösen heißt mit Kenntnis der Summe und der Gewichte $c_j$ die $m_j$ zu bestimmen.

Die Anwendungen solcher Verfahren sind vielfältig. Es sei an dieser Stelle exemplarisch nur auf das Problem des öffentlichen Schlüsselaustauschs mit Hilfe von Chipkarten verwiesen, zu dem technische Realisierungen auf der Basis des wohlbekannten RSA Verfahrens bei dem Projekt Telesec der Deutschen Bundespost Telekom vorliegen (siehe K.D.Wolfenstetter, "Telesec und ISDN-Datensicherheits-Aktivitäten der Deutschen Bundespost Telekom", in *Sicherheit in Informationssystemen*, Hrsg. Lippold, Schmitz, Kersten) Vieweg 1991, Proceedings des gemeinsamen Kongresses Secunet '91 (des BIFOA) und 2. Deutsche Konferenz über Computersicherheit (des BSI), S.123-138). Da öffentliche Verschlüsselungsverfahren verhältnismäßig langsam sind, tauscht man mit ihnen meist nur Schlüssel für schnelle herkömmliche Verfahren aus. Der geheime Schlüssel jedes Benutzers (beispielsweise für ein verschlüsselungsfähiges ISDN Telefon) befindet sich in seiner Chipkarte, hardwaremäßig gegen Auslesen geschützt. Die Zuordnung einer Chipkarte zu ihrem Besitzer geschieht mit einer Persönlichen Identifikations Nummer (PIN).

Will nun Benutzer A mit Benutzer B verschlüsselt kommunizieren, so sendet Benutzer A seinen öffentlichen Schlüssel an B. B wählt einen Schlüssel S für ein herkömmliches Verfahren, verschlüsselt diesen mit Hilfe des öffentlichen Schlüssels von A und schickt dieses Chiffrat an A. A entschlüsselt nun mit seinem geheimen Schlüssel, so daß nun A und B beide in Besitz des Schlüssels $S$ sind, mit dem nun verschlüsselt kommuniziert werden kann.

Da bisher bei allen öffentlichen Verschlüsselungsverfahren keine mathematischen Sicherheitsgarantien abgegeben werden können, ist es von strategischer Bedeutung bisherige und zukünftige technische Entwicklungen nicht ausschließlich auf ein einziges Verfahren (zum Beispiel das RSA Verfahren) zu gründen, damit bei etwaigen Sicherheits-, Akzeptanz- oder anderen Problemen ein Ersatzverfahren zur Verfügung steht.

Die Erfindung betrifft den Einbau der Hintertür, die es dem legitimen Benutzer in einfacher Weise ermöglicht den Rucksack zu entpacken, d.h. die Nachricht zurückzugewinnen.

Zahlreiche öffentliche Verschlüsselungsverfahren basierend auf dem Rucksackprinzip wurden gebrochen, insbesondere solche, die die Rucksackgewichte mit Hilfe von modularen Multiplikationen aus einem leichten Rucksacks gewannen (siehe E.F. Brickell, M.Odlyzko, "Cryptanalysis: A Survey of Recent Results", *Proceedings of the IEEE*, Vol. 76, No.5, May 1988, Seiten 578 bis 593). Andere als sicher geltende Verfahren nach dem Rucksackprinzip (wie z.B. das Chor-Rivest Verfahren: B.Chor, R.L.Rivest, "A Knapsack-Type Public key Cryptosystem based on Arithmetic in Finite Fields", *IEEE* Transactions on *Information Theory*, Vol.IT-34, No.5, September 1988, Seiten 901 bis 909) sind in der Realisierung wesentlich aufwendiger.

Die Aufgabe der Erfindung besteht darin, ein Verfahren zu finden, das ohne Einbußen an Sicherheit eine einfachere Realisierung in der Praxis ermöglicht.

Diese Aufgabe wird erfindungsgemäß durch die kennzeichnenden Merkmale des Patentanspruch 1 gelöst.

Eine vorteilhafte Weiterbildung der Erfindung ergibt sich aus dem Merkmal des Anspruch 2.

Für die Erfindung wesentlich ist die Verwendung der ganzen Gaußschen Zahlen, d.h. derjenigen komplexen Zahlen deren Real- und Imaginärteil ganze Zahlen sind. Nähere Erklärungen zur Theorie solcher Zahlen sind zu finden in G.H.Hardy, E.M.Wright, "An introduction to the theory of numbers", fifth edition, Oxford 1979, Seiten 182 bis 187.

Bezeichne [.] die Rundungsfunktion (z.B. [3,2] = 3, [4,9] = 5), das Runden einer komplexen Zahl $z = x + iy$ (wobei i = $\sqrt{-1}$) sei definiert durch $[x +iy] = [x] + i[y]$. $z^* = x - iy$ ist die zur komplexen Zahl $z$ konjugiert komplexe Zahl. Die modulo Funktion sei gegeben durch

$$z \bmod \pi = z - \left[\frac{z \cdot \pi^*}{\pi \cdot \pi^*}\right] \cdot \pi.$$

Der Kern des vorgeschlagenen Verfahrens ist wie folgt:

a. *öffentlicher Schlüssel:* Die Gewichte $c_j$, $j = 0, 1,..., L - 1$.

b. *geheimer Schlüssel:* Die Gaußsche ganze Zahl $\pi = a + ib$, sowie die Werte $x_j$, $j = 0,1,..., L - 1$.

c. *Verschlüsselung:* Bilde die Summe $c = \sum_{j=0}^{L-1} m_j \cdot c_j$, mit $m_j \in M = \{0,1,...,m\}$.

d. *Entschlüsselung:* Berechne den Realteil von $c \bmod \pi$, der einen leichten Rucksack bildet, woraus die Nachricht zurückgewonnen werden kann.

Damit das Verfahren funktioniert müssen folgenden Bedingungen gelten:

1) Die $x_j$ bilden einen leicht decodierbaren Rucksack.

2) Der größte gemeinsame Teiler von $\pi$ und $\pi^*$ ist gleich 1.

3) Für die ganzzahligen $c_j$ gilt $c_j \bmod \pi = x_j + iy_j$.

4) Die $x_j$ und $y_j$ sind positive ganze Zahlen für die gilt

$$\left(\sum_{j=0}^{L-1} m_j x_j\right) + i\left(\sum_{j=0}^{L-1} m_j y_j\right) \bmod \pi = \left(\sum_{j=0}^{L-1} m_j x_j\right) + i\left(\sum_{j=0}^{L-1} m_j y_j\right) \quad \text{für alle } m_j \in M.$$

(Dies ist z.B. immer der Fall wenn die Summe aller $m_j x_j$ und die Summe aller $m_j y_j$ kleiner als $|(a - b - 1)/2|$ ist, mit $\pi = a + ib$.)

Um zusätzliche Sicherheit zu gewinnen und das Verfahren gegen eventuell mögliche aber bisher unbekannte Attacken zu schützen, sollten nicht die Gewichte $c_j$ sondern die Gewichte $d_j$ veröffentlicht werden wobei

$$d_j \equiv c_{P(j)} \cdot N \bmod n.$$

Hierbei sind $n = \pi \cdot \pi^*$ und $N$ teilerfremde ganze Zahlen und P ist eine zufällig ausgewählte Permutation. $n$, $N$ und $P$ werden ebenfalls geheimgehalten. Vor der oben beschriebenen Entschlüsselung muß dann der Wert

$$c \equiv N^{-1} \cdot \sum d_j m_j \bmod n$$

berechnet werden, wobei $N \cdot N^{-1} \equiv 1 \bmod n$, um dann die permutierten $m_j$ zurückzugewinnen.
Damit das Verfahren sicher ist sollten die Zahlen mindestens folgende Größenordnung haben:

- $L \approx 200$.
- $\log_2 n \approx 500$ bits.
- $\log_2(a - b - 1) \approx 250$ bits.

Beispiel 1 *Um das Beispiel übersichtlich zu halten, sind die Parameter sehr klein gewählt. Sei $\pi = 1168 + i95$ und $L = 7 \Rightarrow n = \pi\pi^* = (1168 + i95)(1168 - i95) = 1168^2 + 95^2 = 1373249$. Die $m_j$ seien aus dem Alphabet $M = \{0, 1\}$. Der leichte* Rucksack *ist hier ein superanwachsender Rucksack (siehe R.C.Merkle, M.E.Hellman, "Hiding Information and Signatures in Trapdoor Knapsacks"*, IEEE Transactions on Information Theory, *Vol.IT-24*, No.5, September 1978, *Seiten 525-530) gegeben durch*

$$(x_0, x_1,..., x_{L-1}) = (2,5,9,19,41,81,199).$$

*und die y- Werte durch*

$$(y_0, y_1, ..., y_{L-1}) = (46, 89, 111, 13, 29, 129, 77).$$

Unter Benutzung der Gleichung u·π+v·π* = 1, die man mit dem erweiterten Euklidischen Algorithmus erhält, folgen sofort die Rucksackgewichte $c_j \equiv (x_j + iy_j) \cdot v\pi^* + (x_j - iy_j) \cdot u\pi$ mod $n$ zu

$$(c_0, c_1, ..., c_6) = (317452, 1270973, 1183975, 447972, 259879, 114137, 1068941).$$

*Um die Nachricht* $(m_0, m_1...., m_6) = (1,0,0,1,0,0,1)$ *zu* verschlüsseln *berechnen wir*

$$c = \sum_{j=0}^{6} c_j \cdot m_j = 317452 + 447972 + 1068941 = 1834365 \,.$$

Der legitime Empfänger berechnet den Realteil von c mod π

$$Re\{c \bmod \pi\} = Re\{220 + i \cdot 136\} = 220,$$

*und löst den* leichten *Rucksack*

$$220 = 1 \cdot 199 + 1 \cdot 19 + 1 \cdot 2 \Rightarrow m = (1,0,0,1,0,0,1).$$

**Patentansprüche**

1.   Verfahren zur gesicherten Datenübertragung über ungesicherte Verbindungen mittels Ver- und Entschlüsselung der Daten nach dem Rucksackprinzip, bei dem die Benutzer im Besitz von wenigstens zwei getrennten Schlüsseln sind, wenigstens einem öffentlichen zum Verschlüsseln und wenigstens einem geheimen zum Entschlüsseln und bei dem der Benutzer A (Datenabsender) die an den Benutzer B (Datenempfänger) zu übertragenden Daten vermöge des öffentlichen Schlüssels von B verschlüsselt, dieses Chiffrat an B sendet, worauf B die Daten mit Hilfe des geheimen Schlüssels von B zurückgewinnt,
**dadurch gekennzeichnet, daß** für den öffentlichen Schlüssel die Gewichte $c_j$, $(j = 0, 1, ..., L - 1)$, für den geheimen Schlüssel die Gaußsche ganze Zahl $\pi = a + ib$ sowie die Werte $x_j$ $(j = 0, 1, ..., L - 1)$ verwendet und für die Verschlüsselung der aus den ganzzahligen Werten $m_j \geq 0$, $(j = 0, 1, ..., L - 1)$, aus der Wertemenge M bestehenden Daten die Summe $c = \sum_{j=0}^{L-1} m_j c_j$ gebildet wird und daß danach zur Entschlüsselung der Realteil von $c$ mod $\pi$ berechnet wird, der einen leichten Rucksack für die Datenrückgewinnung bildet, und daß dabei

- die Werte $x_j$ $(j = 0, 1,..., L - 1)$ einen leicht decodierbaren Rucksack bilden
- der größte gemeinsame Teiler von $\pi$ und $\pi^*$ gleich 1 ist
- für die ganzzahligen $c_j$ die Gleichung $c_j$ mod $\pi = x_j + iy_j$ gilt und
- für die positiven ganzzahligen Werte von $x_j$ und $y_j$ die Bedingung

$$\left(\sum_{j=0}^{L-1} m_j x_j\right) + i\left(\sum_{j=0}^{L-1} m_j y_j\right) \bmod \pi = \left(\sum_{j=0}^{L-1} m_j x_j\right) + i\left(\sum_{j=0}^{L-1} m_j y_j\right)$$

für alle $m_j \in M$ gilt, die insbesondere dann erfüllt ist, wenn die Summe $\sum_{j=0}^{L-1} m_j x_j$ sowie die Summe $\sum_{j=0}^{L-1} m_j y_j$ kleiner als der Betrag von $(a - b - 1)/2$ ist, mit $\pi = a + ib$.

2.   Verfahren nach Anspruch 1, **dadurch gekennzeichnet, daß** für eine zusätzliche Datensicherung anstelle der Gewichte $c_j$ die Gewichte $d_j$ als öffentlicher Schlüssel verwendet werden, wobei

$$d_j \equiv c_{P(j)} \cdot N \bmod n$$

ist mit n = $\pi \cdot \pi^*$ und $N$ als teilerfremden ganzen Zahlen und P als einer zufällig ausgewählten Permutation, die zusammen mit den Gewichten $c_j$ zum geheimen Schlüssel gehören, und daß vor der Entschlüsselung der Wert

$$c \equiv N^{-1} \cdot \textstyle\sum d_j m_j \bmod n$$

berechnet wird, wobei $N \cdot N^{-1} \equiv 1 \bmod n$ ist, und daß danach die permutierten Werte von $m_j$ zurückgewonnen werden.

**Claims**

1. Process for the secure transmission of data over insecure channels by means of encryption and decryption of the data according to the knapsack principle, in which the users are in possession of at least two separate keys, at least one public key for encryption and at least one secret key for decryption, and in which user A (sender of data), using the public key of user B (receiver of data), encrypts the data to be transmitted to B and sends the thus encrypted data to B, whereupon B recovers the data using the secret key of B,
**characterized in that** the weights $c_j$, (j = 0, 1, ..., L - 1) are used for the public key and the Gaussian integer $\Pi = a + ib$ and the values $x_j$ (j = 0, 1, ..., L - 1) are used for the secret key, and, for the encryption of the data consisting of the integral values $m_j \geq 0$, (j = 0, 1, ..., L - 1) and of the value set $M$ the sum $c = \sum_{j=0}^{L-1} m_j c_j$ is formed, and **in that**, thereafter, for decryption, the real part of c mod $\Pi$ is calculated, this forming an easy knapsack for recovery of the data, and **in that**

   - the values $x_j$ (j = 0, 1, ..., L -1) form an easily decodable knapsack;
   - the largest common denominator of $\Pi$ and $\Pi^x$ is 1;
   - for the integral values of $c_j$ there applies the equation $c_j \bmod \Pi = x_j + iy_j$; and
   - for the positive integral values of $x_j$ and $y_j$ there applies the condition

$$\left( \sum_{j=0}^{L-1} m_j x_j \right) + \mathrm{i}\left( \sum_{j=0}^{L-1} m_j y_j \right) \bmod \Pi = \left( \sum_{j=0}^{L-1} m_j x_j \right) + \mathrm{i}\left( \sum_{j=0}^{L-1} m_j y_j \right) \text{ for all } \mathrm{m_j} \in M$$

   which condition is met in particular if the sum $\sum_{j=0}^{L-1} m_j x_j$ and the sum $\sum_{j=0}^{L-1} m_j y_j$ are smaller than the value of $(a - b - 1)/2$, where $\Pi = a + ib$.

2. Process according to claim 1, **characterized in that**, for additional data security, instead of the weights $c_j$ the weights $d_j$ are used as the public key, wherein

$$d_j \equiv c_{p(j)} \cdot N \bmod n$$

with n = $\Pi \cdot \Pi^x$ and with $N$ as relatively prime integers and with $P$ as a randomly selected permutation, these, together with the weights $c_j$, belonging to the secret key, and **in that**, prior to decryption, the value

$$c \equiv N^{-1} \cdot \textstyle\sum d_j m_j \bmod n$$

is calculated, where $N \cdot N^{-1} \equiv 1 \bmod n$, and **in that**, thereafter, the permutated values of $m_j$ are recovered.

**Revendications**

1. Procédé de transmission sécurisée de données sur des liaisons non sécurisées au moyen du codage et décodage des données selon le principe du sac à dos, selon lequel les utilisateurs sont en possession d'au moins deux clés distinctes, au moins une clé publique pour le codage et au moins une clé secrète pour le décodage et selon lequel l'utilisateur A (expéditeur des données) code au moyen de la clé publique de l'utilisateur B (destinataire des données) les données à transmettre à B et envoie à B les données ainsi codées, B récupérant alors les données en utilisant la clé secrète de B,

***caractérisé en ce que*** les poids $c_j$ *(j = 0, 1, ..., L - 1)* sont utilisés pour la clé publique, l'entier gaussien $\Pi = a + ib$ et les valeurs $x_j$ *(j = 0, 1, ..., L - 1)* sont utilisés pour la clé secrète et la somme $c = \sum_{j=0}^{L-1} m_j c_j$ est formée pour la transmission des données composées des valeurs entières $m_j \geq 0$, *(j = 0, 1, ..., L - 1)* de l'ensemble d'arrivée M, et **en ce que**, ensuite, pour le décodage, la partie réelle de c mod $\Pi$ est calculée, ceci formant un sac à dos simple pour la récupération des données, et **en ce que**

- les valeurs $x_j$ *(j = 0, 1, ..., L - 1)* forment un sac à dos facilement décodable ;
- le plus grand dénominateur commun de $\Pi$ et $\Pi^x$ est 1;
- pour les valeurs entières $c_j$ s'applique l'équation $c_j$ *mod* $\Pi = x_j + iy_j$ et
- pour les valeurs entières positives de $x_j$ et $y_j$ s'applique la condition

$$(\sum_{j=0}^{L-1} m_j x_j) + \mathrm{i}(\sum_{j=0}^{L-1} m_j y_j) \bmod \Pi = (\sum_{j=0}^{L-1} m_j x_j) + \mathrm{i}(\sum_{j=0}^{L-1} m_j y_j)$$

pour tous les $m_j \in M$ cette condition étant remplie en particulier si la somme $\sum_{j=0}^{L-1} m_j x_j$ et la somme $\sum_{j=0}^{L-1} m_j y_j$ sont inférieures à la valeur de *(a - b - 1)/2*, avec $\Pi = a + ib$.

**2.** Procédé conformément à la revendication 1, **caractérisé en ce que**, pour une sécurité supplémentaire des données, les poids $d_j$ sont utilisés au lieu des poids $c_j$ comme clé publique, étant donné

$$d_j \equiv cp_{(j)} \cdot N \bmod n$$

avec n = $\Pi \cdot \Pi^x$ et *N* comme entiers relatifs premiers et avec *P* comme permutation choisie au hasard, faisant partie, avec les poids $c_j$ de la clé secrète, et **en ce que**, avant le décodage, la valeur

$$c \equiv N^{-1} \cdot \sum d_j m_j \bmod n$$

est calculée, avec $N \cdot N^{-1} \equiv 1 \bmod n$, et **en ce que**, ensuite, les valeurs permutées de $m_j$ sont récupérées.